# EUROPÄISCHE PATENTSCHRIFT

(11) **EP 3 390 689 B1**
(45) Veröffentlichungstag und Bekanntmachung des Hinweises auf die Patenterteilung: **22.07.2020**
(21) Anmeldenummer: 16806107.5
(22) Anmeldetag: 06.12.2016
(51) Int. Cl.: C23C 18/12, B01J 29/00, B01J 20/16, B01J 20/18, B01J 29/08, B01J 29/18, B01J 29/70, B01J 35/00

(54) **VERFAHREN ZUR AUSBILDUNG EINER ALUMOSILIKAT-ZEOLITH-SCHICHT AUF EINEM ALUMINIUMHALTIGEN METALLISCHEN SUBSTRAT SOWIE VERWENDUNG DES DANACH ERHALTENEN SUBSTRATS**
METHOD OF FORMING AN ALUMINOSILICATE-ZEOLITE LAYER ON AN ALUMINIUM-CONTAINING METALLIC SUBSTRATE AND USE OF THE SUBSTRATE OBTAINED THEREBY
PROCÉDÉ DE FORMATION D'UNE COUCHE DE ZÉOLITHE ALUMINOSILICATE SUR UN SUBSTRAT MÉTALLIQUE CONTENANT DE L'ALUMINIUM ET UTILISATION DU SUBSTRAT AINSI OBTENU

(30) Priorität: 18.12.2015 DE 102015122301
(43) Veröffentlichungstag der Anmeldung: 24.10.2018
(73) Patentinhaber: Fahrenheit GmbH, 06126 Halle (DE)
(72) Erfinder: HERRMANN, Ralph, 06118 Halle/Saale (DE); SCHWIEGER, Wilhelm, 91080 Spardorf (DE); CHANDRA, Rajesh, Kumar, 90402 Nürnberg (DE)
(74) Vertreter: Letzelter, Felix Phillip
(86) Internationale Anmeldenummer: PCT/EP2016/079905
(87) Internationale Veröffentlichungsnummer: WO 2017/102442

(56) Entgegenhaltungen:
- WO-A2-2010/099919
- DE-A1-102008 023 634
- US-A1- 2006 093 806

## Beschreibung

Die vorliegende Erfindung betrifft ein Verfahren zur Ausbildung einer Alumosilikat-Zeolith-Schicht auf einem aluminiumhaltigen metallischen Substrat aus metallischem Aluminium oder einer Aluminiumlegierung, das in eine wässrige Reaktionsdispersion überführt wird, in der als netzwerkbildende Elemente Silizium und gegebenenfalls Aluminium enthalten sind, wobei das Molverhältnis zwischen Aluminium in der wässrigen Reaktionsdispersion zur Summe der in der wässrigen Reaktionsdispersion enthaltenen netzwerkbildenden Elemente unter 0,5 liegt, die das aluminiumhaltige metallische Substrat enthaltende wässrige Reaktionsdispersion erwärmt, dem aluminiumhaltigen metallischen Substrat für den Alumosilikat-Zeolith-Bildungsprozess Aluminium entzogen und die Schicht eines Alumosilikat-Zeoliths auf dem metallischen Substrat durch in-situ-Aufkristallisation ausgebildet wird. Ferner betrifft die Erfindung die Verwendung des auf diese Weise erhaltenen Substrats in sorptionsbasierenden Anwendungsbereichen.

Zeolithe sind im engeren mineralogischen Sinne Silikat-Minerale und insbesondere Alumo-Silikate komplexer chemischer Struktur, die durch die Ausbildung poröser Tetraeder-Netzwerke (T-Netzwerke) charakterisiert sind. Nach der allgemeineren Definition der IZA (International Zeolithe Association) werden unter Zeolithen solche Materialien verstanden, die T-Netzwerke einer Netzwerkdichte von < 19 T-Atome pro 1000 Å³ aufweisen. Sie zeigen eine Struktur mit inneren Hohlräumen, die molekulare Größen annehmen können. Hieraus ergibt sich die Eigenschaft von Zeolithen, Fremdatome bzw. Fremdmoleküle in ihre poröse Struktur aufnehmen zu können. Beispielsweise können Zeolithe große Mengen an Wasser speichern und bei Erhitzung wieder freigeben. Zeolithe sind in Kontakt mit einem Wärmetauscher besonders zur Wärmetransformation geeignet. Hierzu werden nach einem früheren Stand der Technik entweder Schüttungen geformter Zeolithe oder Zeolithe verwendet, die in offenporige Festkörper, die in thermischem Kontakt mit einem Wärmetauscher stehen, eingebracht sind. Ein derartiger Stand der Technik ergibt sich beispielsweise aus der DE 101 59 652 C2.

Ferner werden Zeolithe in der chemischen Industrie für eine Vielzahl weiterer Anwendungen herangezogen. Dies sind z.B. Ionenaustauschprozesse, wobei meist synthetisch hergestellte Zeolithe in Pulverform einer Kristallgröße von wenigen Mikrometern eingesetzt werden. Außerdem werden Zeolithe als Molekularsiebe verwendet, wobei die Zeolithe als lose Schüttung von Kristallen oder geformten Materialien in ein Filtersystem eingebracht werden kann.

Die US 2003/0091872 A1 beschreibt ein Verfahren zum Herstellen einer Zeolith-Schicht auf einem Metall, wie Aluminium, Nickel, Stahl oder Titan. Hierauf werden klassische Aluminiumsilikat-Schichten in einer wässrigen Reaktionsdispersion eines pH-Wertes von neutral bis 12 ausgebildet. Die Reaktionsdispersion enthält auch Aluminium. Durch ein direktes Aufwachsen der Zeolithe auf das Substrat (in-situ Kristallisation) wird die Haftung der Zeolith-Schicht auf dem Substrat verbessert. Die Si- und Al-Quellen in der Lösung liefern die Bauelemente für die auf dem Substrat auszubildenden Alumosilikat-Zeolithe. Im Falle eines aluminiumhaltigen metallischen Substrats können auch einige Aluminiumatome des Substrats in das Alumosilikat-Zeolith-Netzwerk eingebaut werden.

Ein sehr interessanter Vorschlag, auf einem aluminiumhaltigen metallischen Substrat eine Schicht aus einem Alumosilikat-Zeolith auszubilden, ergibt sich aus der WO 2006/08421 A2. Dieser Stand der Technik geht über denjenigen hinaus, der vorstehend dargestellt ist; denn hier wird mit einem deutlichen Aluminium-Unterschuss in der Reaktionsdispersion gearbeitet. Zudem verlangt dieser auch zwingend, dass bei der Ausbildung der Zeolith-Schicht auf dem aluminiumhaltigen Substrat als netzwerkbildendes Element Phosphor in der wässrigen Reaktionsdispersion, in die das aluminiumhaltige metallische Substrat eingebracht wird, enthalten ist. Hierdurch werden Aluminiumphosphat-Zeolithe ausgebildet, die vorteilhaften Anwendungen zugeführt werden können.

Der eingangs bezeichnete Stand der Technik, der auf die WO 2010/099919 zurückgeht, ist bereits zufriedenstellend. Das nach der bekannten Verfahrenstechnologie erhaltene Alumosilikat-Zeolith-beschichtete metallische Substrat ist vielfältigen Verwendungsmöglichkeiten zugänglich, vorzugsweise in sorptionsbasierenden Anwendungsbereichen. Diese Technologie zeigt vielfältige Vorteile, die sich wie folgt darstellen lassen: 1. Es sind dünne, hydrophile Alumosilikat-Zeolith-Schichten auf aluminiumhaltigen metallischen Substraten, wobei insbesondere Al-reiche Alumosilikate vorliegen, zugänglich. Diese tragen eine höhere Gitterladung und sind deshalb deutlich hydrophiler als Al-arme Zeolithe. 2. Es sind klassische Adsorptionsmittel, wie FAU, erstmals als kompakte Schichten mit fester, direkter Bindung auf metallischem Aluminium (sehr gute Wärmeleitung) herstellbar. 3. Es handelt sich bei dem bekannten Verfahren um eine Einschrittsynthese, wobei keine Fremdzeolithschicht als Bindungsmatrix nötig ist. 4. Viele der in Betracht zu ziehenden Alumosilikat-Zeolithe sind ohne Templat und deshalb ohne Kalzinierung zugänglich. 5. Es wird eine Schicht eines aluminiumreichen Alumosilikat-Zeoliths sehr fest auf einem metallischen Al-Träger ausgebildet. Hierbei wird kein Aluminium-Komplexbildner mit O-Ankeratomen, der eine organische Mehrfachsäure oder deren Salz darstellt, herangezogen. Dies gilt auch für den Stand der Technik nach der DE 10 2008 023 634 A1 sowie der US 2006/0093806 A1.

Nach der DE 10 2008 023 634 A1 wird ein aluminiumhaltiges Substrat in einer mindestens Phosphor als Netzwerk-bildendes Element enthaltenen wässrigen Suspension hydrothermal behandelt und darauf durch eine in-situ-Kristallisation eine mikroporöse Primärschicht eines Aluminiumphosphat-Zeoliths ausgebildet. Hierbei wird insbesondere das Mol-Verhältnis zwischen dem in der wässrigen Suspension im Unterschuss vorliegenden Netzwerk-bildenden Aluminium zur Summe aller in der wässrigen Suspension vorliegenden Netzwerk-bildenden Elemente unter 0,5 eingestellt. Dabei wird auf der mikroporösen Primärschicht ein poröses Sekundärmaterial dadurch ausgebildet, indem das die mikroporöse Primärschicht aufweisende aluminiumhaltige Substrat einer weiteren Behandlung in einer wässrigen Suspension, die die erforderlichen Netzwerk-bildenden Elemente für die Ausbildung des porösen Sekundärmaterials enthält, durchgeführt wird.

Die US 2006/0093806 A1 betrifft ein Verfahren zum Aufbringen einer korrosionsbeständigen und hydrophilen Beschichtung auf die Oberfläche eines metallischen Substrats, das in einer alkalischen Lösung hohen pH-Wertes korrosionsanfällig ist. Daher wird eine korrosionsbeständige Schicht als Basis auf der Oberfläche des Substrats ausgebildet, wobei die Basisschicht reines Siliciumdioxidzeolith oder ein Zeolith mit hohem Siliciumdioxidanteil ist und das Silicium:Aluminium-Atomverhältnis mindestens etwa 100 beträgt. Es schließt sich die Ausbildung einer mittleren (gemischten) Zeolithschicht auf der Oberfläche der Basisschicht an. Anschließend wird auf der Oberfläche der mittleren Schicht eine hydrophile Schicht ausgebildet, wobei die Oberschicht einen Zeolith hohen Aluminiumgehalts darstellt und das Silicium:Aluminium-Atomverhältnis darin weniger als 5 beträgt.

Es hat sich gezeigt, dass hier in Einzelfällen Optimierungen angestrebt werden könnten. In diesen Einzelfällen haben sich folgende, keineswegs ausgeprägten, Nachteile dargestellt: geringe Schichtausbeute, unerwünschtes schwerlösliches Aluminiumoxidhydrat (z.B. Gibbsit) fällt gelegentlich als störender Niederschlag auf dem Träger-AI (negative Abschirmung der Oberfläche) an. Gelegentlich stellt sich eine unerwünschte lokale Auflösung des Al-Trägers ein und erfordert dadurch eine Einschränkung des Synthesefeldes (z.B. geringere Konzentrationen) zum Schutz des Al-Trägers.

Die Erfindung hat sich daher die Aufgabe gestellt, die bei dem vorstehend beschriebenen Stand der Technik auftretenden Nachteile zu vermeiden.

Die Lösung der oben dargestellten Aufgabe stellt sich durch folgenden Gegenstand der Erfindung dar: Dieser betrifft ein Verfahren zur Ausbildung einer Alumosilikat-Zeolith-Schicht auf einem aluminiumhaltigen metallischen Substrat aus metallischem Aluminium oder einer Aluminiumlegierung, das in eine alkalisch eingestellte wässrige Reaktionsdispersion eingebracht wird, in der als netzwerkbildende Elemente Silizium und gegebenenfalls Aluminium enthalten sind, wobei unabhängig davon, ob Aluminium in der wässrigen Reaktionsdispersion vorliegt oder nicht, das Molverhältnis zwischen dem Aluminium in der wässrigen Reaktionsdispersion zur Summe der in der wässrigen Reaktionsdispersion enthaltenen netzwerkbildenden Elemente, das Unterschussverhältnis, unter 0,5, insbesondere unter 0,4, liegt, wobei dann, wenn Aluminium in der wässrigen Reaktionslösung nicht vorliegt, das Unterschuss-Molverhältnis 0 beträgt, und die das aluminiumhaltige metallische Substrat enthaltende alkalisch eingestellte wässrige Reaktionsdispersion erwärmt, dem aluminiumhaltigen metallischen Substrat für den Alumosilikat-Zeolith-Bildungsprozess Aluminium entzogen und die Schicht eines Alumosilikat-Zeoliths durch in-situ-Aufkristallisation gebildet wird, insbesondere indem in die alkalisch eingestellte wässrige Reaktionsdispersion eine Si-Quelle in einer zur Ausbildung des Si/Al-Verhältnisses von 1 bis weniger als 10 ausreichenden Menge und bei einem Unterschuss-Molverhältnis von mehr als 0 eine zusätzliche Al-Quelle, die der Anforderung des molaren Unterschusses in der wässrigen Reaktionsdispersion genügt, eingebracht werden. Dieses Verfahren ist dadurch gekennzeichnet, dass der alkalisch eingestellten wässrigen Reaktionsdispersion ein Aluminium-Komplexbildner mit O-Ankeratomen, der eine organische Mehrfachsäure oder deren Salz darstellt, einverleibt wird.

Von Vorteil ist es, wenn diese Aluminium-Komplexbildner keine strukturdirigierende Templatwirkung aufweisen, wie viele Amine und Ammoniumsalze. Dabei ist es zweckmäßig, die Reaktionsbedingungen so zu wählen, dass die Synthesefenster für die gewünschten Al-haltigen Zeolithe nicht verlassen werden. Speziell gilt dies für den Gehalt an Alkaliionen- und den einzustellenden basischen pH-Wert. Angemerkt sei hier, dass durch die zusätzliche Einbringung von Zeolithkristallisationskeimen die gezielte Herstellung von Zeolithschichten auf einen aluminiumhaltigen metallischen Träger verbessert werden kann. Diese Keime werden dafür zweckmäßig als poröses Coating in Schichtform auf den zu beschichtenden aluminiumhaltigen metallischen Träger aufgebracht und erfüllen so auch die Funktion einer Art Schutzschicht.

Zum Kern der Erfindung: Dieser besteht in der Verwendung von Aluminium-komplexierenden Verbindungen (Chelatbildner). Die erfindungsgemäß in Betracht kommenden Verbindungen dieser Art sind organische Mehrfachsäuren und deren Salze. Verschiedene Chelatbildner mit Koordinationszahlen von 2 bis 8 (in Klammern) werden nachfolgend aufgeführt: Oxalat (2), Dimercaptobernsteinsäure (2), Acetylaceton (2), Tartrat (2) und Citrat (3).

Die oben bezeichneten Salze der Mehrfachsäuren liegen insbesondere in Form eines Natrium- und/oder Kaliumsalzes vor.

Bevorzugte Liganden sind hierbei organische Di- und Tri-Säuren, insbesondere Oxalsäure, Malonsäure, Bernsteinsäure, Glutarsäure, Adipinsäure, Maleinsäure, Weinsäure, Äpfelsäure, Glutaminsäure und/oder Citronensäure, insbesondere in Form der Natrium- und/oder Kaliumsalze.

Die Konzentration des erfindungsgemäß eingesetzten Komplexbildners in der wässrigen Reaktionsdispersion ist vorzugsweise größer als 8,5. Es sollte insbesondere ein Überschuss an Alkalihydroxid, der nicht durch die organische Säure neutralisiert wird, vorhanden sein. Die Mindestmenge des Komplexbildnersalzes in Bezug auf Na₂O könnte mit 0,15 mol für das Dianion und 0,1 mol für das Trianion angegeben werden. Dies ist eine geeignete Richtlinie für den Fachmann bei der Durchführung des erfindungsgemäßen Verfahrens unter Berücksichtigung der weiteren erfindungsrelevanten Parameter erfolgreich vorzugehen.

Mit dem Einsatz der Aluminium-Komplexbildner der oben bezeichneten Art sind vielfältige Vorteile verbunden. Diese ermöglichen eine höhere Variabilität des Verhältnisses von zu beschichtender Aluminiumoberfläche und dem Volumen der eingesetzten Lösung und ein breiteres Synthesefeld (z.B. höhere Eduktkonzentrationen). Sie verhindern bereits in geringen Dosierungen die Bildung von unerwünschten, schwerlöslichen Aluminiumoxidhydraten (z.B. Gibbsit), erlauben eine bessere Kontrolle der Auflösung des metallischen Aluminiums und damit eine verbesserte Stabilität des Trägers. Der steuerbare Al³⁺-Gehalt in der Lösung erlaubt die gezielte Herstellung einer größeren Zahl von Zeolithen. Die organischen Komplexbildner sind durch Waschen vom Produkt zu entfernen oder bei geringeren Temperaturen als Amine zersetzbar, wobei dann keine Amine, Acrylverbindungen, (Iso)Cyanide oder (Iso)Cyanate und Stickoxide wie bei der Kalzinierung der Amine entstehen.

Die im Rahmen der Verwirklichung der vorliegenden Erfindung ablaufenden Reaktionen werden nachfolgend exemplarisch dargestellt. Die ohne Komplexierung im basischen stattfindende Bildung von ausfallenden Al-Oxid/Hydroxid-Spezies kann durch die Komplexierung verhindert werden, ohne dass eine spätere Zeolithentstehung gestört wird. Dadurch entsteht eine höhere Al³⁺Konzentration in der Lösung, die über eine Gleichgewichtsverschiebung die Auflösung des metallischen Al-Trägers reduziert und geeignete Bedingungen für die Zeolithbildung (Al³⁺Übersättigung) bewirkt. Nachfolgend ist ein beispielhafter Reaktionsverlauf mit und ohne Aluminium-Komplexbildner dargestellt:
Aluminium-Auflösung in wässriger Lösung ohne Komplexierung:

   Al + 3 H₂O → Al³⁺ + 3 OH- + 3/2 H₂ → Al(OH)₃ + 3/2 H₂
Verfahren mit Komplexierung:

   Al³⁺ + 3 Oxalat²⁻ → [Al(Oxalat)₃]³⁻
Zeolithbildung in alkalischer wässriger Lösung:

   [Al(Oxalat)₃]³⁻, + m Si(OH)₄ → 3nOxalat²⁻ + [(AlO₂)n(SiO₂)ₘ]ⁿ⁻

   [(AlO₂)n(SiO₂)ₘ]ⁿ⁻ = Zeolith

Wenn im Rahmen der vorliegenden Erfindung auf einem aluminiumhaltigen metallischen Substrat eine Schicht aus einem aluminiumreichen Alumosilikat-Zeolith ausgebildet wird, dann ist dies weitestgehend zu verstehen. Nur beispielhaft, wenn auch bevorzugt, sollen folgende aluminiumreiche Alumosilikat-Zeolithe herausgestellt werden: FAU (Zeolith X und Y), LTA, CHA, MOR und GIS. Diese bevorzugten aluminiumreichen Alumosilikat-Zeolithe erfüllen die weitergehende bevorzugte Forderung gemäß der Erfindung, dass darin das Si/Al-Verhältnis 1 bis 10, insbesondere weniger als 6 beträgt. Bevorzugt ist es, dass dieses Verhältnis kleiner als 4, insbesondere kleiner als 3,5 ist. Das Si/Al-Verhältnis kann bis zu einem Wert von 1 führen, der prinzipiell nicht unterschritten werden kann. Diese Zeolithe zeichnen sich aus durch eine Wassersorptionskapazität bei 25°C von mindestens 12 % oder mehr, bezogen auf die reine Masse des Zeolithen, und durch IUPAC Typ I Gleichgewichtsisothermen für Wasserdampf (vgl. Sing et al, Pure Appl. Chem. 57 (1985) S. 603) aus und sind nach Rodrizez-Reinoso et al. (vgl. Rodrizez-Reinoso et al. Studies in Surface Science and Catalysis 62 (1991) S. 685-692) den hydrophilen "Gruppe 1" Adsorbentien zuzuordnen. Ein höherer Anteil an Aluminium führt in der Regel zu einer festeren Anhaftung der ausgebildeten Zeolith-Schicht auf dem aluminiumhaltigen Substrat.

Auf einem Bauteil wird eine Alumosilikat-Zeolith-Schicht ausgebildet, die eine aluminiumhaltige metallische Schicht aus Aluminium oder einer Aluminiumlegierung aufweist, und eine Stärke von mehr als 0,05 mm, insbesondere von mehr als 0,2 mm aufweist.

Ziel der Erfindung ist es auch, wie dargestellt, auf einem aluminiumhaltigen metallischen Substrat eine Schicht aus einem aluminiumreichen Alumosilikat-Zeolith der bezeichneten Anforderungen auszubilden. Auch hier unterliegt diese keinen relevanten Einschränkungen. Grundsätzlich kann es sich um ein Substrat aus metallischem Aluminium handeln. Andere Elemente können zur Bildung einer Legierung einbezogen werden. Typische Aluminiumlegierungen sind beispielsweise AlFe 1,5 Mn 0,5 oder AIMg3. Grundsätzlich können spezielle Legierungsbestandteile im Hinblick auf eine vorteilhafte Auswirkung für den jeweiligen Anwendungsfall einbezogen werden, wie beispielsweise Silizium.

Von besonderer Bedeutung ist es, dass das Aluminium entweder in der wässrigen Reaktionsdispersion nicht vorliegt, wobei das angesprochene Unterschuss-Molverhältnis dann bei 0 liegt, oder aber nur in solchen Mengen, dass der entsprechende Wert mindestens unter 0,5, insbesondere unter 0,4 liegt. Da sich der Unterschuss auf das im hergestellten Zeolith vorliegende Si/Al-Verhältnis bezieht und dieses Verhältnis insbesondere für die aluminiumreichen Alumosilikat-Zeolithe von 1 bis 10 variieren kann, ist auch eine abgestufte Angabe des Unterschussquotienten Al/(Al+Si) sinnvoll. Hierzu finden sich in der der Beschreibung folgenden Tabelle 1 entsprechende Angaben, woraus sich ein Zusammenhang zwischen dem Aluminium-Unterschuss (AI/(AI+Si)) in der Reaktionsdispersion und der ZeolithZusammensetzung (abgerundete Angaben) ergibt. Als besonders bevorzugt gilt das Si/Al-Verhältnis von kleiner als 6, insbesondere kleiner als 4.

Es hat sich als vorteilhaft erwiesen, wenn das angesprochene Molverhältnis unter 0,05, insbesondere unter 0,02 liegt. Es kann besonders bevorzugt sein, wenn das Unterschuss-Molverhältnis 0 beträgt, wenn die wässrige Reaktionsdispersion keine Al-Quelle unmittelbar enthält. Diese Unterschuss-Anforderung ist technologisch wie folgt zu erklären. Hierdurch läuft eine in-situ-Aufkristallisation der besagten Schicht auf das aluminiumhaltige metallische Substrat ab. Diese Aufkristallisation ist ein wesentlicher Grund dafür, dass das Verfahrenserzeugnis die wünschenswerten Eigenschaften zeigt, insbesondere eine gute Haftung der ausgebildeten Zeolith-Schicht auf der Oberfläche des aluminiumhaltigen metallischen Substrats. Beträgt dieser Unterschuss beispielsweise 0, dann bedeutet das, dass das netzwerkbildende Aluminium zur Ausbildung der aufkristallisierten Zeolith-Schicht allein dem aluminiumhaltigen metallischen Substrat entzogen wird. Dabei wird das elementare Aluminium zum Al³⁺ oxidiert und im wässrigen Reaktionsmedium dabei äquivalent Wasserstoff gebildet. Das Al³⁺ liegt dann primär mit (OH)⁻ oder erfindungsgemäß komplexiert als Gegenion im Bereich der Substratoberfläche vor und kann dort weiterreagieren. Dies führt zu der besonders guten Verankerung zwischen Oberfläche des aluminiumhaltigen Substrats und dem ausgebildeten Alumosilikat-Zeolith. Sehr detailliert hat sich die WO 2006/084211 A mit dem angesprochenen Unterschuss-Molverhältnis befasst, die vorstehend bereits angesprochen wurde und auf die verwiesen sei. Diese Anforderungen werden in überraschend günstigem Ausmaße dadurch erfüllt, dass der erfindungsgemäße Kerngedanke verwirklicht wird, wonach der erläuterten alkalisch eingestellten wässrigen Reaktionsdispersion ein Aluminium-Komplexbildner mit O-Ankeratomen, der eine organische Mehrfachsäure oder deren Salz darstellt, einverleibt wird. Dies gilt auch für die nachfolgend angesprochenen Gesichtspunkte, die sich mit vorteilhaften Weiterbildungen der Erfindung befassen.

Von besonderer Bedeutung ist es bei der Verwirklichung der erfindungsgemäßen Verfahrenslehre, bei der Wahl der erforderlichen bzw. bevorzugten Bedingungen ein besonderes Augenmerk darauf zu richten, dass das aluminiumhaltige Substrat keiner zerstörenden Auflösung unterliegt, um den erfindungsgemäß angestrebten Erfolg zu erreichen. Insbesondere ist es dabei wichtig, dass das Substrat nach Abschluss des Verfahrens noch den Anforderungen genügt, die bei späteren Anwendungen gestellt sind. So sollte es weiterhin die erforderliche mechanische Stabilität bzw. die gewünschte Integrität in seiner Formgebung aufweisen.

Wie gezeigt, enthält die eingesetzte wässrige Reaktionsdispersion eine Si-Quelle. Hier sind keine relevanten Beschränkungen gegeben. Vorzugsweise handelt es sich um Kieselsäure, Silikate und/oder Kieselsäureester. Für den Fall, dass zur praktischen Ausführung des erfindungsgemäßen Verfahrens in die wässrige Reaktionsdispersion unter Beachtung der angesprochenen Anforderungen eine Al-Quelle gegeben wird, ist es von Vorteil, wenn es sich dabei um ein Aluminiumoxidhydrat, insbesondere Pseudoböhmit, und/oder Aluminiumaluminat handelt.

Bei der Durchführung des erfindungsgemäßen Verfahrens wird die bestehende wässrige Reaktionsdispersion alkalisch eingestellt, da andernfalls die Schicht eines aluminiumreichen metallischen Alumosilikat-Zeoliths nicht entsteht. Es ist dem Fachmann weitgehend freigestellt, wie er den pH-Wert der wässrigen Reaktionsdispersion alkalisch einstellt. Hierbei kann es sich insbesondere um Natriumhydroxid, Kaliumhydroxid, Amine, basische Na-Salze und/oder um Natriumaluminat handeln. Es ist bevorzugt, dass der pH-Wert der wässrigen Reaktionsdispersion auf mehr als 9 und/oder weniger als 13,8 eingestellt wird, insbesondere bei Al-Legierungen mit einem Al-Gehalt von mehr als 90%.

Es ist im Einzelfall vorteilhaft, dass kolloidale Quellen des Siliziums und/oder des Aluminiums herangezogen werden. Hierbei kann es zweckmäßig sein, zu deren Mineralisation Fluoridsalze oder Fluorwasserstoffsäure hinzuzugeben, wobei bedacht werden muss, dass die wässrige Reaktionsdispersion eines pH-Wert von mehr als 7 aufweisen muss.

Darüber hinaus kann es vorteilhaft sein, wenn die wässrige Reaktionsdispersion ein organisches Templat bzw. ein organisches strukturdirigierendes Agens enthält, wobei es sich insbesondere um Amine bzw. Ammoniumsalze oder Kronenether handelt. Die Funktion derartiger Substanzen ist bekannt. Sie werden in der Literatur u.a. auch als *"Schablonenmolekül"* und *"Templatmolekül"* bezeichnet (vgl. Stephen G. Wilson, *"Templating in Molecular Seive Synthesis"* (von Elesivier Science P.V.)).

In Einzelfällen kann es bevorzugt sein, die Kristallbildung bei der Ausbildung der Schicht des aluminiumreichen Alumosilikat-Zeoliths bei der Durchführung des erfindungsgemäßen Verfahrens zu beschleunigen. Das ist besonders dann vorteilhaft, wenn die zum Einsatz kommende Reaktionsdispersion eine hohe Aggressivität gegenüber dem aluminiumhaltigen Substrat aufweist. In diesem Fall ist es zweckmäßig, um schneller eine geschlossene Zeolithschicht zu erhalten, Kristallisationskeime oder ein gealtertes Gel hinzuzugeben. Bei einem gealterten Gel handelt es sich um eine Reaktionsdispersion, die befähigt ist, den jeweiligen Zielzeolithen der Schicht in Pulverform zu bilden und die sich nach mehreren Stunden bei Raumtemperatur bereits in der Keimbildungsphase der Zeolithentwicklung befindet, ohne jedoch zur Zeolithwachstumsphase zu gelangen. Die hohe Viskosität des Gels erlaubt es zusätzlich, die Kristallisationskeime direkt auf das aluminiumhaltige metallische Substrat aufzubringen.

Das erfindungsgemäße Verfahren wird vorzugsweise bei erhöhter Temperatur durchgeführt. Zweckmäßig ist es, dass die wässrige Reaktionsdispersion und das darin befindliche aluminiumhaltige metallische Substrat auf eine Temperatur von 50 bis 200°C, insbesondere von 70 bis 130°C, erwärmt werden. Für den Fall, dass die Temperatur von 100°C überschritten wird, kann es erforderlich sein, die Reaktion in einem geschlossenen System, demzufolge in einem Autoklaven, durchzuführen.

Die Erfinder haben erkannt, dass es für eine vorteilhafte Ausführung des erfindungsgemäßen Verfahrens besonders zweckmäßig ist, dem Verhältnis der Oberfläche des aluminiumhaltigen Substrats zu dem Volumen der wässrigen Reaktionsdispersion (in cm²/cm³) Aufmerksamkeit zuzuwenden. Es erweist sich als bevorzugt, wenn dieses Verhältnis auf 0,03 bis 20, insbesondere auf 0,1 bis 15 und ganz besonders bevorzugt auf 1 bis 8 eingestellt wird. Ist es kleiner als 0,1, insbesondere kleiner als 0,03, dann steht zu viel wässrige Reaktionsdispersion zur Verfügung, die sich auf das aluminiumhaltige metallische Substrat zerstörend auswirken kann. Zudem zeigte sich, dass ein über dem aluminiumhaltigen Substrat stehendes, zu großes Volumen das Schichtwachstum zugunsten des unerwünschten Kristallwachstums in der Reaktionsdispersion verringert. Wird der Wert von 15, insbesondere von 20 überschritten, dann stehen in der Reaktionslösung nicht genug Reaktionspartner für eine ausreichende Bedeckung des aluminiumhaltigen Substrats mit Alumosilikat-Zeolith-Kristallen zur Verfügung.

Es könnte sich die Frage stellen, wie stark die erfindungsgemäß auf dem aluminiumhaltigen metallischen Substrat ausgebildete Zeolith-Schicht ist. Bestimmend ist hierfür die spätere Anwendung des erhaltenen Erzeugnisses. Hier zeigt die Erfindung eine große Flexibilität. Bei ihrer Ausführung kann die Schichtdicke wünschenswert eingestellt werden und vorzugsweise bei etwa 5 µm bis 200 µm, insbesondere 5 µm bis 100 µm, liegen. Zur Ausbildung besonders starker Beschichtungen ist es zweckmäßig, mit frischer wässriger Reaktionsdispersion das Schichtwachstum weiterzuführen.

Nach der Aufkristallisation des aluminiumreichen Alumosilikat-Zeoliths auf das aluminiumhaltige metallische Substrat ist es lediglich erforderlich, das beschichtete Substrat aus der verbliebenen Reaktionsdispersion zu entnehmen. Zweckmäßigerweise wird verbliebene Reaktionsdispersion von dem beschichteten Substrat durch Waschen entfernt. Für den Fall, dass das erfindungsgemäße Verfahren ein organisches strukturdirigierendes Agens bzw. ein organisches Templat heranzieht, besteht die Möglichkeit, dieses Agens bzw. Templat, gegebenenfalls nach Waschen, durch eine Kalzinierung weitergehend zu entfernen.

Die erfindungsgemäß erhaltenen Alumosilikat-Zeolith-beschichteten aluminiumhaltigen metallischen Substrate sind vielfältigen Verwendungsmöglichkeiten zugänglich, vorzugsweise in sorptionsbasierenden Anwendungsbereichen, insbesondere zur heterogenen Katalyse, bei Separations- und Reinigungsprozessen, in Sorptionswärmepumpen, im Zusammenhang mit immobilisierten Katalysatoren sowie in der Mikroreaktionstechnik. Diese Aufzählung ist nicht beschränkend.

Die Erfindung lässt bei ihrer praktischen Verwirklichung vielfältige Vorteile in Erscheinung treten. Unerwünschte Fremdphasen entstehen nicht, die Teilreaktion der Aluminiumauflösung ist stark reduziert und gut kontrollierbar. Es wird ein vorteilhafter Zeolith als Schicht auf dem metallischen Träger ausgebildet. Ein besonderer Vorteil ist darin zu sehen, dass nahezu alle technisch relevanten Zeolithe zugänglich geworden sind. Die angesprochene Gibbsit-Bildung wird stark zurückgedrängt. Im Großen und Ganzen werden sämtliche Optimierungsziele erreicht, die vorstehend im Hinblick auf die Optimierung der Lehre der WO 2010/099919 A2 angesprochen sind.

Besonders vorteilhaft erweist sich die Erfindung, nach der spezielle Aluminium-Komplexbildner mit O-Ankeratomen herangezogen werden, im Vergleich zu Komplexbildnern mit N-Ankeratomen wie folgt: Aluminiumionen bilden mit Liganden mit N als Ankeratom (Amine, Ammoniumsalze) zwar Komplexe, die jedoch in einer Folgereaktion zu einem reaktionsträgen Aluminiumoxidhydrat (Gibbsit) weiterreagieren. Dieses fällt sofort aus und steht somit für die gewünschte Zeolithbildung als Aluminiumquelle nicht zur Verfügung. Demgegenüber, was ein bedeutsamer Vorteil der vorliegenden Erfindung ist, bilden Komplexbildner mit O als Ankeratomen, die eine organische Mehrfachsäure und deren Salz darstellen, Komplexe, die anschließend zum reaktionsfreudigen Al-Oxidhydrat Pseudoböhmit (eine übliche Aluminiumquelle in klassischen Zeolithsynthesen) weiterreagieren. Hier existieren über eine längere Zeitdauer für die Zeolithbildung geeignete Aluminium-Spezies. Die geeignete Aluminium-Komplexierung gemäß der Erfindung hat zudem einen für die Aufkristallisation auf aluminiumhaltigem metallischem Substrat positiven Effekt. So wird das reaktive Metall weniger stark aufgelöst, was sonst bei den hohen notwendigen pH-Werten stets kritisch ist. Der Grund ist möglicherweise die erhöhte Präsenz der Aluminiumionen (als Komplex) in der Lösung, wodurch sich das Auflösungsgleichgewicht stärker auf die Seite des metallischen Aluminiums verschiebt.

Die Erfindung soll nachfolgend anhand von Beispielen noch näher erläutert werden.

Anhand der obigen Darstellung des erfindungsgemäßen Verfahrens, insbesondere unter Berücksichtigung der konkretisierenden Ausführungen und der nachfolgenden erläuternden Beispiele ist der Fachmann problemlos in der Lage, die Erfindung mit Erfolg auszuführen, wobei auch die nachfolgende Tabelle 1 bedeutsam sein kann.

**Tabelle 1: Beispiele zur Abhängigkeit des Aluminium-Unterschusses Al/(Al+Si) in der Reaktionsdispersion von der Zeolithzusammensetzung (Angaben abgerundet)**

| | Ohne Unterschuss | Unterschuss | | |
|---|---|---|---|---|
| Verhältnis im Zeolith Si/Al | 100 % vom theoret. Al-Anteil | 80 % vom theoret. Al-Anteil | 10 % vom theoret. Al-Anteil | 0 % vom theoret. Al-Anteil |
| | Al/(Al +Si) | Al/(Al+Si) | Al/(Al +Si) | Al/(Al +Si) |
| 1,00 | 0,50 | 0,40 | 0,05 | 0 |
| 2,00 | 0,33 | 0,27 | 0,03 | 0 |
| 3,00 | 0,25 | 0,20 | 0,03 | 0 |
| 4,00 | 0,20 | 0,16 | 0,02 | 0 |
| 5,00 | 0,17 | 0,13 | 0,02 | 0 |

### Beispiel 1

Eine Reaktionsmischung der Zusammensetzung 1,65 Na₂O : 1,0 SiO₂ : 0,5 Tri-Natriumcitronat : 140 H₂O mit Natriummetasilikat als Siliziumquelle wird hergestellt. Dazu wird als Teillösung 1 eine 25%ige NaOH-Lösung mit der benötigten Citronensäure und der Hälfte des Wassers bei 600 U/min 1h gerührt. Als Teillösung 2 wird die Siliziumquelle (98%ig) mit dem Rest des Wassers ebenfalls bei 600 U/min für 1h gerührt. Dann wird Teillösung 2 zu Teillösung 1 gegeben und die Mischung für 2h mit 800 U/min gerührt.

Für die Synthese wurden 120 ml PTFE-Behälter genutzt. Aluminiumproben (mit oder ohne Keimkristalle) werden in den Behältern platziert und mit der Reaktionslösung bedeckt. Die Behälter werden dann geschlossen und für 36 h bei 95°C in einen vorgeheizten Ofen gestellt.

Nach der Synthese werden die Behälter mit Wasser gekühlt (5-10 min). Die beschichteten Aluminiumproben werden entnommen und gründlich mit Wasser gewaschen. Die Proben werden dann bei 75°C getrocknet.
Analyse: Zeolith X in der gebildeten Schicht auf den Aluminiumproben

### Beispiel 2

Eine Reaktionsmischung der Zusammensetzung 0,9 Na₂O : 1,0 SiO₂ : 0,5 Di-Natriumtartrate: 140 H₂O mit Natriummetasilikat als Siliziumquelle wird entsprechend Beispiel 1 hergestellt.

Für die Synthese wurden 120 ml PTFE-Behälter genutzt. Aluminiumproben (mit oder ohne Keimkristalle) werden in den Behältern platziert und mit der Reaktionslösung bedeckt. Die Behälter werden dann geschlossen und für 70 h bei 70°C in einen vorgeheizten Ofen gestellt.

Nach der Synthese werden die Behälter mit Wasser gekühlt (5-10 min). Die beschichteten Aluminiumproben werden entnommen und gründlich mit Wasser gewaschen. Die Proben werden dann bei 75°C getrocknet.
Analyse: Zeolith Y in der gebildeten Schicht auf den Aluminiumproben

Die nachfolgenden Figuren sollen einen Beitrag zum weitergehenden Verständnis der vorliegenden Erfindung leisten.

Darin bedeuten:

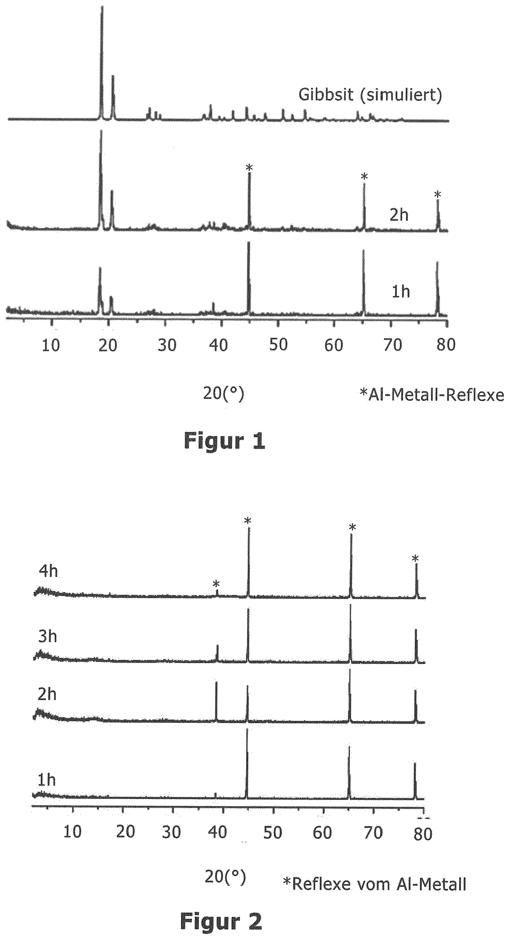

Fig. 1: Auflösung von Aluminium in der NaOH-Lösung ohne Zuschläge bei pH 12,5 unter Bildung von nachteiligem Gibbsit
Fig. 2: Aluminium-Auflösung in der NaOH-Lösung mit Na-Tartrat (Komplexbildner gemäß der Erfindung) bei pH 12,5. Es zeigt sich keine Bildung von Gibbsit

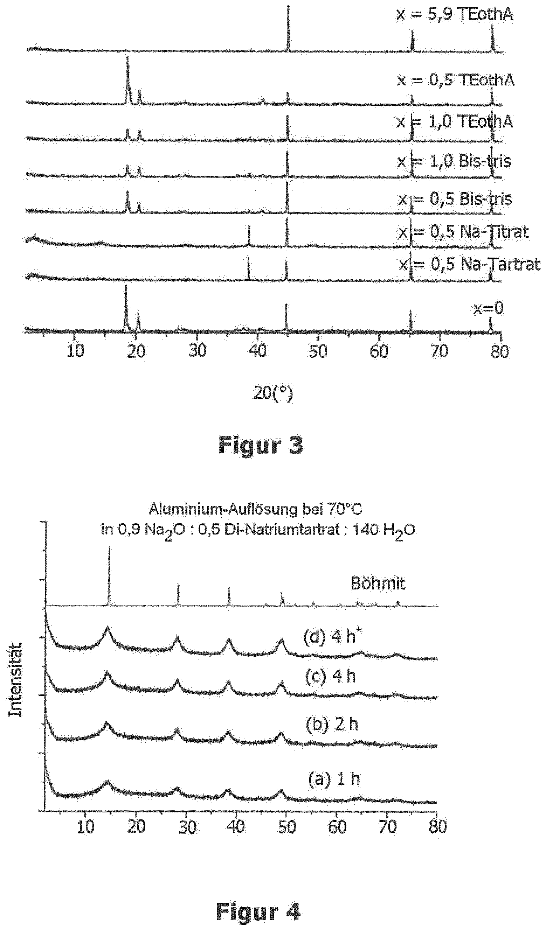

Fig. 3: XRD-Messung (Röntgenpulverdiffraktometrie) an Sediment aus der Reaktion von metallischem Aluminium in 0,9 Na₂O: 140 H₂O : x Komplexbildner (TEothA = Triethanolamin, Bis-tris = Bis-(2-hydroxy-ethyl)-amino-tris(hydroxymethyl)-methan. Aus der Figur 3 wird deutlich sichtbar, dass ohne Komplexbildner oder mit geringen Konzentrationen an Amin-Komplexbildnern unerwünschtes Gibbsit entsteht. Mit Mehrfachsäure-Komplexen oder einem deutlichen Überschuss an Triethanolamin entsteht Pseudoböhmit, was eine übliche Al-Quelle in der Zeolithsynthese ist.
Fig. 4: Diese betrifft XRD-Messungen an den Produkten der Auflösung von metallischem Aluminium in alkalischer Lösung bei geringer Tartrat-Konzentration. Es wird nur Pseudoböhmit gebildet. Die Lösung entspricht einer erfindungsgemäßen Zeolithsyntheselösung, jedoch ohne die benötigte Si-Quelle (0,9 Na₂O : 0,5 Di-Natriumtartrat : 140 H₂O)

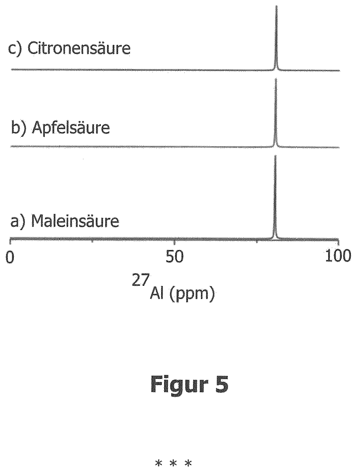

Fig. 5: Diese zeigt Al-NMR-Spektren der Al-Komplexe von Mehrfachsäuren a) Maleinsäure, b) Äpfelsäure und c) Citronensäure)

## Patentansprüche

1. Verfahren zur Ausbildung einer Alumosilikat-Zeolith-Schicht auf einem aluminiumhaltigen metallischen Substrat aus metallischem Aluminium oder einer Aluminiumlegierung, das in eine alkalisch eingestellte wässrige Reaktionsdispersion eingebracht wird, in der als netzwerkbildende Elemente Silizium und gegebenenfalls Aluminium enthalten sind, wobei unabhängig davon, ob Aluminium in der wässrigen Reaktionsdispersion vorliegt oder nicht, das Molverhältnis zwischen dem Aluminium in der wässrigen Reaktionsdispersion zur Summe der in der wässrigen Reaktionsdispersion enthaltenen netzwerkbildenden Elemente unter 0,5 liegt, wobei dann, wenn Aluminium in der wässrigen Reaktionslösung nicht vorliegt, das Unterschuss-Molverhältnis 0 beträgt, und die das aluminiumhaltige metallische Substrat enthaltende alkalisch eingestellte wässrige Reaktionsdispersion erwärmt und dem aluminiumhaltigen metallischen Substrat für den Alumosilikat-Zeolith-Bildungsprozess Aluminium entzogen und die Schicht eines Alumosilikat-Zeoliths auf dem aluminiumhaltigen metallischen Substrat durch in-situ-Aufkristallisation gebildet wird, **dadurch gekennzeichnet, dass** der alkalisch eingestellten wässrigen Reaktionsdispersion ein Aluminium-Komplexbildner mit O-Ankeratomen, der eine organische Mehrfachsäure oder deren Salz darstellt, einverleibt wird.

2. Verfahren nach Anspruch 1, **dadurch gekennzeichnet, dass** das Salz der organischen Mehrfachsäure ein Natrium- und/oder Kaliumsalz darstellt.

3. Verfahren nach Anspruch 1 oder 2, **dadurch gekennzeichnet, dass** als organische Mehrfachsäure Citronensäure, Weinsäure, Oxalsäure, Malonsäure, Äpfelsäure und/oder Maleinsäure bzw. ein Salz hiervon eingesetzt wird.

4. Verfahren nach mindestens einem der vorhergehenden Ansprüche, **dadurch gekennzeichnet, dass** als zusätzliche Al-Quelle neben dem aluminiumhaltigen metallischen Substrat als Al-Quelle Aluminiumoxidhydrate, insbesondere Pseudoböhmit, und/oder Natriumaluminat neben dem im Substrat enthaltenen Aluminium einsetzt werden.

5. Verfahren nach mindestens einem der vorhergehenden Ansprüche, **dadurch gekennzeichnet, dass** als Si-Quelle Kieselsäure, Silikate und/oder Kieselsäureester eingesetzt werden.

6. Verfahren nach mindestens einem der vorhergehenden Ansprüche, **dadurch gekennzeichnet, dass** zur Einstellung alkalischer Bedingungen in der wässrigen Reaktionsdispersion Natriumhydroxid, Kaliumhydroxid, basische Na- oder K-Salze und/oder Aluminate herangezogen werden.

7. Verfahren nach mindestens einem der vorhergehenden Ansprüche, **dadurch gekennzeichnet, dass** der pH-Wert der wässrigen Reaktionsdispersion auf mehr als 9 und/oder weniger als 13,8, insbesondere bei Al-Legierungen mit einem Al-Gehalt von mehr als 90% eingestellt wird.

8. Verfahren nach mindestens einem der vorhergehenden Ansprüche, **dadurch gekennzeichnet, dass** das Verhältnis der Oberfläche des aluminiumhaltigen Substrats zu dem Volumen der wässrigen Reaktionsdispersion (in cm²/cm³) zwischen 1 und 8 eingestellt wird.

9. Verfahren nach mindestens einem der vorhergehenden Ansprüche, **dadurch gekennzeichnet, dass** solche aluminiumreichen Alumosilikat-Zeolithe ausgebildet werden, bei denen das Si/Al-Verhältnis kleiner als 10, insbesondere kleiner als 6 ist.

10. Verfahren nach mindestens einem der vorhergehenden Ansprüche, **dadurch gekennzeichnet, dass** auf dem aluminiumhaltigen Substrat eine Schicht aus einem aluminiumreichen Alumosilikat-Zeolith in Form von LTA, FAU, CHA, MOR oder GIS ausgebildet wird.

11. Verfahren nach mindestens einem der vorhergehenden Ansprüche, **dadurch gekennzeichnet, dass** das Unterschuss-Molverhältnis unter 0,05, insbesondere unter 0,02 liegt.

12. Verfahren nach mindestens einem der vorhergehenden Ansprüche, **dadurch gekennzeichnet, dass** die wässrige Reaktionsdispersion ein organisches Templat bzw. organisches strukturdirigierendes Agens enthält, insbesondere in Form von Aminen bzw. Ammoniumsalzen oder Kronenethern, vorliegt.

13. Verfahren nach mindestens einem der vorhergehenden Ansprüche, **dadurch gekennzeichnet, dass** im Falle kolloidaler Si- und/oder Al-Quellen zu deren Mineralisation Fluoridsalze oder Fluorwasserstoffsäure zugegeben werden.

14. Verfahren nach mindestens einem der vorhergehenden Ansprüche, **dadurch gekennzeichnet, dass** die wässrige Reaktionsdispersion auf eine Temperatur von 50 bis 200°C, insbesondere von 70 bis 130°C, erwärmt wird.

15. Verfahren nach mindestens einem der vorhergehenden Ansprüche, **dadurch gekennzeichnet, dass** zur Beschleunigung der Kristallbildung bei der Ausbildung der aluminiumreichen Alumosilikat-Zeolithschicht Kristallisationskeime oder ein gealtertes Gel hinzugegeben werden.

16. Verwendung des 'mit einem aluminiumreichen Alumosilikat-Zeolith beschichteten aluminiumhaltigen metallischen Substrats, erhalten nach einem Verfahren nach mindestens einem der vorhergehenden Ansprüche, in sorptionsbasierenden Anwendungsbereichen.

17. Verwendung nach Anspruch 16 zur heterogenen Katalyse, bei Separations- und Reinigungsprozessen, in Sorptionswärmepumpen, im Zusammenhang mit immobilisierten Katalysatoren sowie in der Mikroreaktionstechnik.

## Claims

1. A method for forming an alumosilicate zeolite layer on an aluminium-containing metallic substrate of metallic aluminium or an aluminium alloy which is introduced into an alkalised aqueous reaction dispersion in which silicon and optionally aluminium are contained as network-forming elements, wherein, irrespective of whether aluminium is present in the aqueous reaction dispersion or not, the molar ratio between the aluminium in the aqueous reaction dispersion and the total of the network-forming elements contained in the aqueous reaction dispersion is below 0.5, wherein when aluminium is not present in the aqueous reaction solution the sub-stoichiometric molar ratio is 0, and the alkalised aqueous reaction dispersion which contains the aluminium-containing metallic substrate is heated and aluminium is removed from the aluminium-containing metallic substrate for the alumosilicate zeolite formation process and the layer of an alumosilicate zeolite is formed on the aluminium-containing metallic substrate by in situ crystallisation, **characterised in that** an aluminium complexing agent with O anchor atoms which constitutes an organic polyacid or the salt thereof is incorporated in the alkalised aqueous reaction dispersion.

2. A method according to Claim 1, **characterised in that** the salt of the organic polyacid constitutes a sodium and/or potassium salt.

3. A method according to Claim 1 or Claim 2, **characterised in that** citric acid, tartaric acid, oxalic acid, malonic acid, malic acid and/or maleic acid or a salt thereof is used as organic polyacid.

4. A method according to at least one of the preceding claims, **characterised in that** in addition to the aluminium-containing metallic substrate as Al source aluminium oxide hydrates, especially pseudoboehmite, and/or sodium aluminate in addition to the aluminium contained in the substrate are used as additional Al source.

5. A method according to at least one of the preceding claims, **characterised in that** silicic acid, silicates and/or silicic acid esters are used as Si source.

6. A method according to at least one of the preceding claims, **characterised in that** sodium hydroxide, potassium hydroxide, basic Na or K salts and/or aluminates are used for setting alkaline conditions in the aqueous reaction dispersion.

7. A method according to at least one of the preceding claims, **characterised in that** the pH value of the aqueous reaction dispersion is set to more than 9 and/or less than 13.8, especially for Al alloys with an Al content of more than 90%.

8. A method according to at least one of the preceding claims, **characterised in that** the ratio of the surface of the aluminium-containing substrate to the volume of the aqueous reaction dispersion (in cm²/cm³) is set to between 1 and 8.

9. A method according to at least one of the preceding claims, **characterised in that** those aluminium-rich alumosilicate zeolites in which the Si/AI ratio is less than 10, especially less than 6, are formed.

10. A method according to at least one of the preceding claims, **characterised in that** a layer of an aluminium-rich alumosilicate zeolite in the form of LTA, FAU, CHA, MOR or GIS is formed on the aluminium-containing substrate.

11. A method according to at least one of the preceding claims, **characterised in that** the sub-stoichiometric molar ratio is below 0.05, especially below 0.02.

12. A method according to at least one of the preceding claims, **characterised in that** the aqueous reaction dispersion contains an organic template or organic structure-directing agent, especially is present in the form of amines or ammonium salts or crown ethers.

13. A method according to at least one of the preceding claims, **characterised in that** in the case of colloidal Si and/or Al sources fluoride salts or hydrofluoric acid are added for the mineralisation thereof.

14. A method according to at least one of the preceding claims, **characterised in that** the aqueous reaction dispersion is heated to a temperature of 50 to 200°C, especially of 70 to 130°C.

15. A method according to at least one of the preceding claims, **characterised in that** in the formation of the aluminium-rich alumosilicate zeolite layer nuclei of crystallisation or an aged gel are added in order to accelerate the crystal formation.

16. Use of the aluminium-containing metallic substrate coated with an aluminium-rich alumosilicate zeolite, which substrate is obtained according to a method according to at least one of the preceding claims, in absorption-based fields of application.

17. Use according to Claim 16 for heterogeneous catalysis, in the case of separation and cleaning processes, in absorption heat pumps, in conjunction with immobilised catalysts and in microreaction technology.

## Revendications

1. Procédé pour la formation d'une couche de zéolithe aluminosilicate sur un substrat métallique contenant de l'aluminium à partir d'aluminium métallique ou d'un alliage d'aluminium, qui est introduit dans une dispersion aqueuse réactionnelle ajustée à un pH alcalin, qui contient du silicium et le cas échéant de l'aluminium à titre d'éléments formateurs de réseaux, dans lequel le rapport molaire entre l'aluminium présent dans la dispersion aqueuse réactionnelle et la somme des éléments formateurs de réseau présents dans la dispersion aqueuse réactionnelle est inférieur à 0,5, indépendamment du fait que l'aluminium soit présent ou non dans la dispersion aqueuse réactionnelle, dans lequel le rapport molaire sous-excédentaire est de 0 quand l'aluminium n'est cependant pas présent dans la solution aqueuse réactionnelle, et la dispersion aqueuse réactionnelle ajustée à un pH alcalin comprenant le substrat métallique contenant de l'aluminium est chauffée et l'aluminium est retiré du substrat métallique contenant de l'aluminium pour le procédé de formation de zéolithe aluminosilicate et la couche d'une zéolithe aluminosilicate est formée sur le substrat métallique contenant de l'aluminium par recristallisation in situ, **caractérisé en ce qu'**un agent complexant l'aluminium doté d'atomes d'ancrage à O, qui représente un polyacide organique ou un de ses sels, est incorporé à la dispersion aqueuse réactionnelle ajustée à pH alcalin.

2. Procédé selon la revendication 1, **caractérisé en ce que** le sel du polyacide organique représente un sel de sodium et/ou de potassium.

3. Procédé selon la revendication 1 ou 2, **caractérisé en ce que** l'acide citrique, l'acide tartrique, l'acide oxalique, l'acide malonique, l'acide malique, et/ou l'acide maléique et/ou un sel de ceux-ci est mis en œuvre comme polyacide organique.

4. Procédé selon au moins l'une des revendications précédentes, **caractérisé en ce que** des oxyhydrates d'aluminium, en particulier de la pseudobohémite, et/ou de l'aluminate de sodium, en plus de l'aluminium contenu dans le substrat, sont mis en œuvre comme source d'Al supplémentaire en plus du substrat métallique contenant de l'aluminium comme source d'Al.

5. Procédé selon au moins l'une des revendications précédentes, **caractérisé en ce que** de l'acide silicique, des silicates et/ou des esters d'acide silicique sont mis en œuvre comme source de Si.

6. Procédé selon au moins l'une des revendications précédentes, **caractérisé en ce que** de l'hydroxyde de sodium, de l'hydroxyde de potassium, des sels de Na ou K basiques et/ou des aluminates sont utilisés pour ajuster les conditions alcalines dans la dispersion aqueuse réactionnelle.

7. Procédé selon au moins l'une des revendications précédentes, **caractérisé en ce que** le pH de la dispersion aqueuse réactionnelle est ajusté à plus de 9 et/ou moins de 13,8, en particulier pour les alliages d'Al ayant une teneur en Al de plus de 90 %.

8. Procédé selon au moins l'une des revendications précédentes, **caractérisé en ce que** le rapport de la surface du substrat contenant de l'aluminium sur le volume de la dispersion aqueuse réactionnelle (en cm²/cm³) est ajusté entre 1 et 8.

9. Procédé selon au moins l'une des revendications précédentes, **caractérisé en ce que** des zéolithes aluminosilicates riches en aluminium, dans lesquelles le rapport Si/Al est inférieur à 10, en particulier inférieur à 6, sont formées.

10. Procédé selon au moins l'une des revendications précédentes, **caractérisé en ce qu'**une couche en une zéolithe aluminosilicate riche en aluminium sous la forme de LTA, FAU, CHA, MOR ou GIS est formée sur le substrat contenant de l'aluminium.

11. Procédé selon au moins l'une des revendications précédentes, **caractérisé en ce que** le rapport molaire sous-excédentaire est inférieur à 0,05, en particulier inférieur à 0,02.

12. Procédé selon au moins l'une des revendications précédentes, **caractérisé en ce que** la dispersion aqueuse réactionnelle contient une matrice organique et/ou un agent organique dirigeant la structure, en particulier sous la forme d'amines et/ou de sels d'ammonium ou d'éthers couronnes.

13. Procédé selon au moins l'une des revendications précédentes, **caractérisé en ce que**, en cas de sources de Si et/ou Al colloïdal, des sels de fluorure ou de l'acide fluorhydrique sont ajoutés pour leur minéralisation.

14. Procédé selon au moins l'une des revendications précédentes, **caractérisé en ce que** la dispersion aqueuse réactionnelle est chauffée à une température de 50 à 200°C, en particulier de 70 à 130°C.

15. Procédé selon au moins l'une des revendications précédentes, **caractérisé en ce que** des germes de cristallisation ou un gel modifié sont ajoutés lors de la formation de la couche de zéolithe aluminosilicate riche en aluminium pour accélérer la formation des cristaux.

16. Utilisation du substrat métallique contenant de l'aluminium revêtu d'une zéolithe aluminosilicate riche en aluminium, obtenu d'après un procédé selon au moins l'une des revendications précédentes, dans des domaines d'application basés sur la sorption.

17. Utilisation selon la revendication 16 pour la catalyse hétérogène, lors de procédés de séparation et de purification, dans des pompes à chaleur par sorption, dans le contexte de catalyseurs immobilisés ainsi que dans la technique de la microréaction.
